# EUROPÄISCHE PATENTSCHRIFT

(11) **EP 1 164 827 B1**
(45) Veröffentlichungstag und Bekanntmachung des Hinweises auf die Patenterteilung: **02.01.2003**
(21) Anmeldenummer: 00918775.8
(22) Anmeldetag: 09.03.2000
(51) Int. Cl.: A01C 7/08

(54) **PNEUMATISCHER VERTEILER**
PNEUMATIC DISTRIBUTOR
DISTRIBUTEUR PNEUMATIQUE

(30) Priorität: 30.03.1999 US 281556
(43) Veröffentlichungstag der Anmeldung: 02.01.2002
(73) Patentinhaber: DEERE & COMPANY, Moline, Illinois 61265-8098 (US)
(72) Erfinder: GREGOR, David, Walter, Davenport, IA 52806 (US); SNIPES, Terry, Lee, East Moline, IL 61244 (US); WISOR, Donald, Raymond, Moline, IL 61265 (US)
(74) Vertreter: Holst, Sönke, Dr.
(86) Internationale Anmeldenummer: EP0002044
(87) Internationale Veröffentlichungsnummer: WO00059288

(56) Entgegenhaltungen:
- EP-A- 0 897 660
- DE-A- 2 461 762
- DE-A- 4 316 208
- FR-A- 2 591 416
- US-A- 4 793 743
- US-A- 5 855 303

## Beschreibung

Die Erfindung betrifft einen pneumatischen Verteiler zum Einbringen von Produkten in einen Luftstrom, mit einer ersten Reihe von Produkteinbringrohren, insbesondere Venturirohren, durch die ein erster Luftstrom hindurchströmt und die mit einer Öffnung zum Einbringen der Produkte in den ersten Luftstrom versehen sind, und mit einer zweiten Reihe von Produkteinbringrohren, insbesondere Venturirohren, durch die ein zweiter Luftstrom hindurchströmt und die mit einer Öffnung zum Einbringen der Produkte in den zweiten Luftstrom versehen sind.

Pneumatische Sägeräte und andere Sägeräte werden gewöhnlich von einem Traktor gezogen und bringen Saat oder Dünger, oder beides gleichzeitig auf einem Feld aus. Beispielsweise kann ein pneumatisches Sägerät in Kombination mit einem dahinter laufenden Bodenbearbeitungsgerät über ein Feld gezogen werden, um Saat und Dünger unter die Bodenoberfläche zu bringen. Ein pneumatisches Sägerät hat als Hauptbauelement einen Ausbringgutwagen mit Rädern, der einen oder mehreren an einem Rahmen befestigten Produkttanks zur Aufnahme von Produkten aufweist, bei denen es sich in der Regel um Saatgut oder Dünger oder beides handelt. Pneumatische Sägeräte weisen im allgemeinen außerdem ein Meßsystem auf, das Produkte aus den Tanks abmißt, und ein pneumatisches Verteilersystem, das die abgemessenen Produkte aus dem Tank dem Boden zuführt.

Es ist bekannt, pneumatische Sägeräte mit volumetrischen Meßsystemen zu versehen, die ein festgelegtes Volumen an Saatgut pro zurückgelegter linearer Längeneinheit abmessen. Diese volumetrischen Meßsysteme weisen typischerweise entweder Schneckenförderer oder ausgekehlte Zylinder (Meßwalzen) auf, die sich in einem Produktreservoir drehen, um granuläre Produkte abzumessen. Bei der Drehung dieser Förderer werden die Produkte sukzessive in ein pneumatisches Verteilersystem gefördert. Das pneumatische Verteilersystem eines pneumatischen Sägeräts weist im allgemeinen ein Gebläse auf, um wenigstens einen Luftstrom bereitzustellen, der durch das pneumatische Verteilersystem bis zu Säscharen strömt, die die Produkte im Boden ablegen. Abgemessene Produkte werden mittels eines pneumatischen Primärverteilers, der unterhalb des Meßsystems angeordnet ist, in den Luftstrom eingebracht. Die Produkte werden durch den Luftstrom durch Verteilerleitungen zu einer Reihe von Sekundärverteilern (sogenannte Kopfstücke oder Header) verbracht, die wiederum die Produkte durch einzelne Leitungen auf Säschare verteilen, welche Furchen- oder Bodenöffnern des Bodenbearbeitungsgeräts nachlaufen.

Die Bediener konventioneller Sägeräte haben oft Probleme, die Primärverteiler zu konfigurieren, die die abgemessenen Produkte aus mehreren Tanks in das pneumatische Verteilersystem einbringen. Wenn ein Bediener den Tank für einen anderen Zweck zu verwenden beabsichtigt oder die Einstellung des Bodenbearbeitungsgeräts ändern möchte, muß er die stromab des Primärverteilers liegenden Verteilerleitungen neu konfigurieren, um sicherzustellen, daß die Produkte an der richtigen Stelle des Bodenbearbeitungsgeräts ankommen. Eine mögliche Lösung dieses Problems ist in der US 5 855 303 A offenbart. Die Konfiguration erfolgt dort durch in den Verteiler einzubauende Platten, was jedoch recht umständlich ist. Dort wird auch vorgeschlagen, zwischen dem Produkttank und dem Messsystem ein Absperrventil vorzusehen, das das Ausbringgut entweder dem Messsystem oder einer Ausbringguträumkammer zuführt.

Das der Erfindung zugrunde liegende Problem wird darin gesehen, einen verbesserten Verteiler bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt einen Verteiler für ein pneumatisches Verteilersystem eines Sägeräts vor, der insbesondere als Primärverteiler dienen kann, und mit einer ersten Reihe und einer zweiten Reihe von Produkteinbringrohren, in der Regel Venturirohren, ausgestattet ist. Die erste Reihe ist in der Regel oberhalb der zweiten Reihe angeordnet. Ein Auswahlventil ist stromab des Meßsystems, in der Regel oberhalb der ersten Reihe von Produkteinbringrohren, angeordnet und führt die abgemessenen Produkte entweder der ersten oder der zweiten Reihe von Produkteinbringrohren zu. Die Produkteinbringrohre sind Rohre, die das Einbringen (insbesondere Einschießen oder Injizieren) der Produkte in den jeweiligen Luftstrom ermöglichen. In der ersten Position des Auswahlventils lassen die Ventilelemente eine Öffnung im Produkteinbringrohr der ersten Reihe frei, so daß die Produkte vom Meßsystem in das Produkteinbringrohr der ersten Reihe hineingelangen, insbesondere fallen oder eingesaugt werden können. Dabei verdecken die Ventilelemente einen Schacht, der für die Produkte einen Kanal zum Produkteinbringrohr der zweiten Reihe bereitstellt. Dieser Schacht liegt beidseits des Produkteinbringrohrs der ersten Reihe. In der zweiten Position des Auswahlventils verdeckt das Ventilelement die Öffnung im Produkteinbringrohr der ersten Reihe und legt den Kanal zum Produkteinbringrohr der zweiten Reihe frei. Die Produkte gelangen somit zum Produkteinbringrohr der zweiten Reihe.

Auf diese Weise wird ein Verteiler bereitgestellt, der ein Auswahlventil aufweist, mit dem abgemessene Produkte vom Meßsystem einer auswählbaren Reihe von Produkteinbringrohren zugeführt werden können.

Vorzugsweise umfaßt das Auswahlventil zwei sich quer erstreckende, in Längsrichtung verschiebbare Stäbe und sich quer dazu zwischen den Stäben erstreckende Ventilelemente. Letztere sind insbesondere konvex geformt.

Das Auswahlventil kann mit einem oder zwei Handgriffen ausgestattet sein, die endseitig daran angebracht sind und die die jeweils ausgewählte Position unschwer erkennbar machen.

Weiterhin ist eine Einrichtung zum Arretieren des Auswahlventils in der ersten bzw. zweiten Position vorgeschlagen, die ein versehentliches Verstellen des Auswahlventils verhindert.

Das Auswahlventil kann weiterhin mit ersten und zweiten Belüftungsventilen ausgestattet sein, die am Ende des Auswahlventils zwischen Handgriffen und den Ventilelementen des Auswahlventils angeordnet sind. Ist das Auswahlventil in der ersten Position, ist das erste Belüftungsventil geöffnet und leitet vom ersten (in der Regel oberen) Luftstrom abgezweigte Luft in einen unmittelbar oberhalb des Primärverteilers angeordneten Produkttank. Das zweite Belüftungsventil ist dann geschlossen, da es Luft vom zweiten (in der Regel unteren) Luftstrom abzweigt. In analoger Weise ist das erste Belüftungsventil geschlossen und das zweite Belüftungsventil geöffnet, wenn das Auswahlventil sich in seiner zweiten Position befindet, so daß Luft vom zweiten (unteren) Luftstrom in den Produkttank geleitet wird. Auf diese Weise wird Luft aus demselben Luftstrom zum Druckbeaufschlagen des Produkttanks abgezweigt, der auch die abgemessenen Produkte aufnimmt.

In der Zeichnung ist ein nachfolgend näher beschriebenes Ausführungsbeispiel der Erfindung dargestellt. Es zeigt:
- Fig. 1: eine schematische Seitenansicht eines pneumatischen Sägerätes,
- Fig. 2: eine perspektivische Ansicht eines Verteilers,

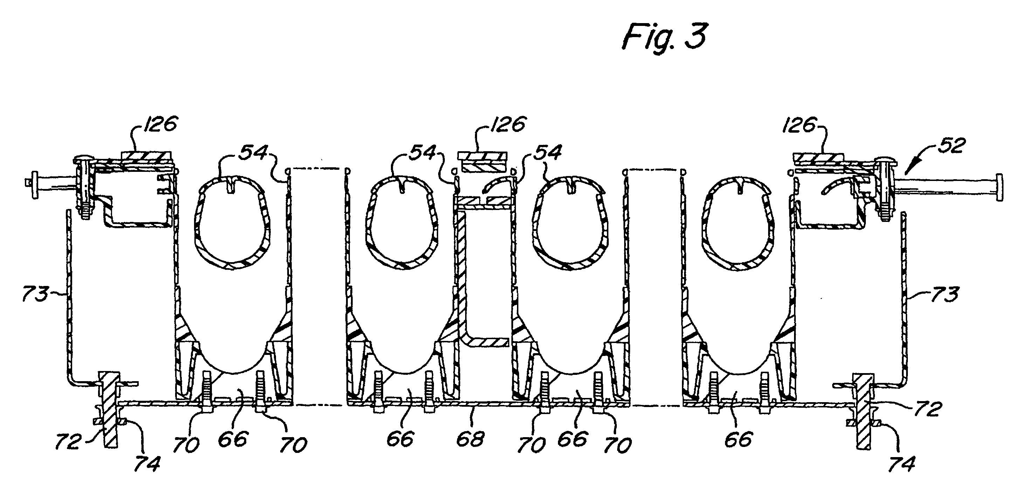

- Fig. 3: einen Querschnitt durch die Vorderseite des Verteilers,
- Fig. 4: einen seitlichen Querschnitt durch einen Verteiler und ein Meßsystem mit zugehörigem Meßeinsatz,
- Fig. 5: einen perspektivischen Schnitt durch den Verteiler mit einem in einer ersten Position befindlichen verschiebbaren Auswahlventil,
- Fig. 6: einen perspektivischen Schnitt durch den Verteiler mit dem Auswahlventil in der zweiten Position,
- Fig. 7: eine Explosionszeichnung eines Belüftungsventils,
- Figur 8: ein perspektivisches Schema des pneumatischen Verteilersystems, und

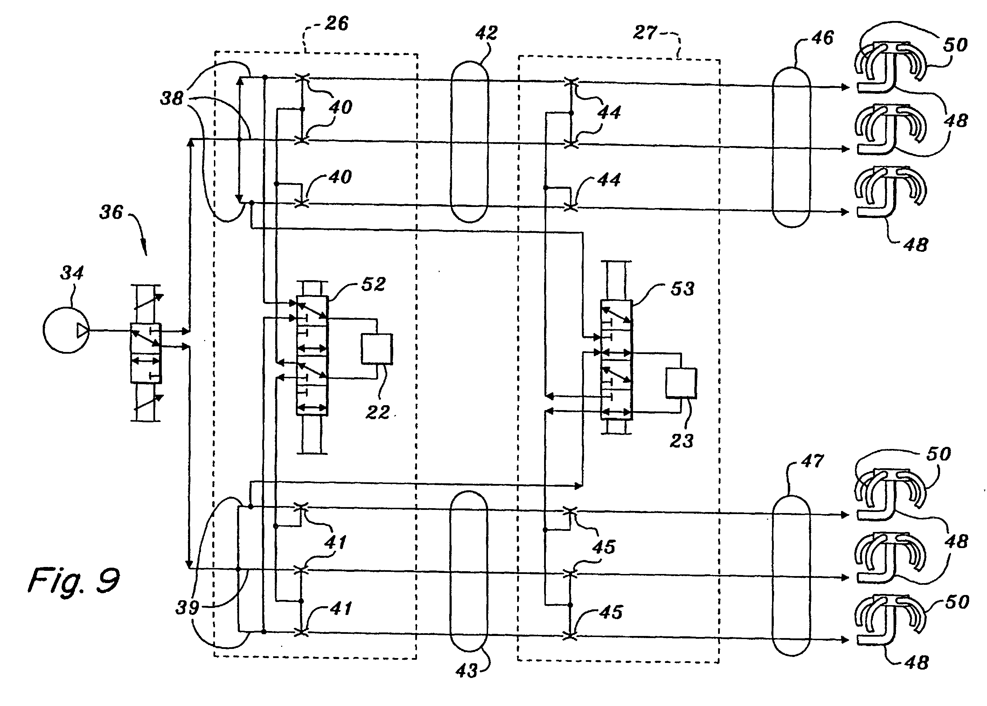

- Figur 9: ein Schema des Luftflusses.

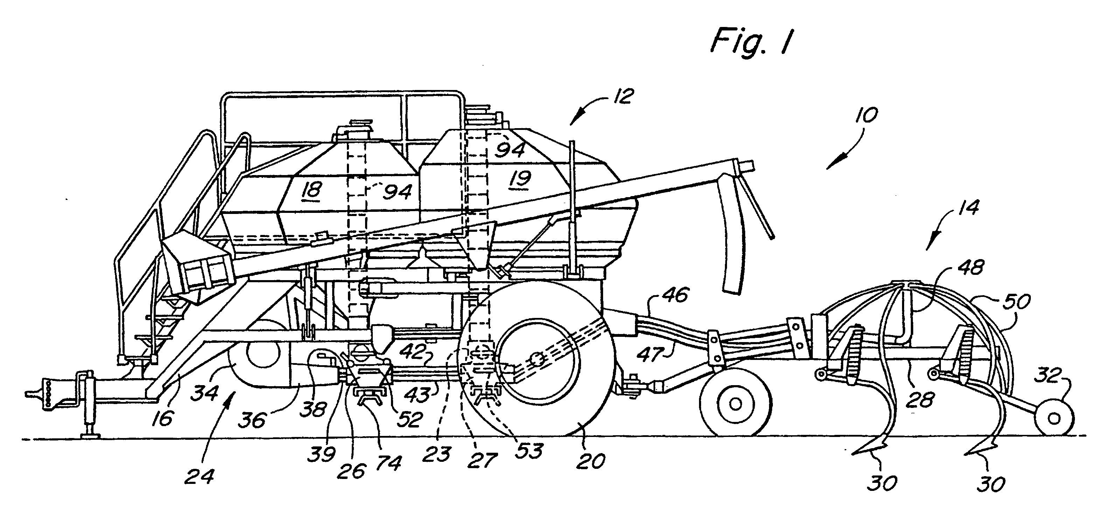

Wie in Figur 1 dargestellt, umfaßt ein pneumatisches Sägerät 10 einen Ausbringgutwagen 12 und ein Bodenbearbeitungsgerät 14. Der Ausbringgutwagen 12 wird in der Regel mittels eines Traktors über ein Feld gezogen, auf dem Saatgut auszubringen ist. Der Ausbringgutwagen 12 hat einen Rahmen 16, der einen ersten Produkttank 18 und einen zweiten Produkttank 19 trägt. Räder 20 sind drehbar am Rahmen 16 befestigt. Der erste Produkttank 18 ist mit einem ersten Meßsystem 22 ausgestattet und der zweite Produkttank 19 ist mit einem zweiten Meßsystem 23 ausgestattet. Die Meßsysteme 22 und 23 sind unterhalb der Produkttanks 18, 19 angeordnet und werden mit Produkten daraus beaufschlagt, um die Produkte in gesteuerter Weise in ein pneumatisches Verteilersystem 24 einzuführen. Unterhalb des ersten Meßsystems 22 ist ein erster pneumatischer Primärverteiler 26 angeordnet. Ein zweiter pneumatischer Primärverteiler 27 ist unter dem zweiten Meßsystem 23 angeordnet. Beide Primärverteiler 26, 27 sind. Teil des pneumatischen Verteilersystems 24. Das Bodenbearbeitungsgerät 14, das vom Ausbringgutwagen 12 gezogen wird, umfaßt einen Rahmen 28, an dem Boden- oder Furchenöffner 30 befestigt sind. Das Bodenbearbeitungsgerät 14 kann auch mit Vorrichtungen zum Schließen der Furche ausgestattet sein, wie beispielsweise Schließrädern oder Verdichtern 32. Figur 1 zeigt ein pneumatisches Sägerät 10 mit zwei Luftströmen, bei dem erste Produkte aus einem ersten Produkttank 18 in den oberen Bereich des Luftstroms und zweite Produkte aus dem zweiten Produkttank 19 in den unteren Bereich des Luftstroms geleitet werden. Die vorliegende Erfindung kann auch bei Geräten mit drei Luftströmen verwendet werden, bei denen drei Produkte in drei unterschiedliche Bereiche des Luftstroms eingefügt werden.

Das pneumatische Verteilersystem 24 führt abgemessene Produkte aus den Produkttanks 18, 19 den Furchenöffnern 30 zu. Die in den Produkttanks 18, 19 enthaltenen Produkte können Saat, Dünger oder andere granulare (kornförmige) Produkte sein. Das pneumatische Verteilersystem 24 umfasst ein Gebläse 34, das durch einen hydraulischen Motor angetrieben wird, und einen Strom druckbeaufschlagter Luft durch eine verstellbare Luftkammer 36 leitet, die den Luftstrom in einen oberen Abschnitt, der auf eine obere Reihe erster Rohre 38 gerichtet ist, und einen unteren Abschnitt, der auf eine untere Reihe erster Rohre 39 gerichtet ist, teilt. Die obere Reihe erster Rohre 38 leitet den oberen Bereich des Luftstroms in eine obere Reihe von als Produkteinbringrohren dienenden Venturirohren 40 im ersten Primärverteiler 26. Die untere Reihe erster Rohre 39 leitet den unteren Bereich des Luftstroms in eine untere Reihe von als Produkteinbringrohren dienenden Venturirohren 41 im ersten Primärverteiler 26.

Von der oberen Reihe der Venturirohre 40 erstreckt sich eine zweite obere Reihe von oberen Rohren 42 nach hinten, die bis zu einer oberen Reihe von als Produkteinbringrohren dienenden Venturirohren 44 am zweiten Primärverteiler 27 verlaufen. Eine zweite untere Reihe von Rohren 43 erstreckt sich zwischen der unteren Reihe von Venturirohren 41 des ersten Primärverteilers 26 und einer unteren Reihe von als Produkteinbringrohren dienenden Venturirohren 45 des zweiten Primärverteilers 27.

Eine dritte obere Reihe von Rohren 46 ist pneumatisch mit der oberen Reihe von Venturirohren 44 des zweiten Primärverteilers 27 gekoppelt und erstreckt sich bis zu einzelnen Sekundärverteilern 48, die einzelne Rohre 50 aufweisen, die sich bis zu den Furchenöffnern 30 erstrecken. In ähnlicher Weise ist die untere Reihe von Venturirohren 45 des zweiten Primärverteilers mit einer dritten unteren Reihe von Rohren 47 versehen, die sich bis zu Sekundärverteilern 48 erstrecken. Die Sekundärverteiler 48 sind identisch und umfassen ein sich nach oben erstreckendes Rohr, das ein Kopfteil aufweist, der die im Luftstrom enthaltenen Produkte durch die einzelnen Rohre 50 auf die einzelnen Furchenöffner 30 verteilt.

Produkte aus den Produkttanks 18 und 19 werden durch die jeweiligen Meßsysteme 22 bzw. 23 abgemessen. Die Produkte treten durch die Venturirohre 40, 41, 44 oder 45 in den Luftstrom ein. Der erste Primärverteiler 26 ist mit einem ersten Auswahlventil 52 versehen, das zwischen dem ersten Meßsystem 22 und den Venturirohren 40 und 41 angeordnet ist. Der zweite Primärverteiler 27 ist mit einem zweiten Auswahlventil 53 versehen, das analog zwischen dem zweiten Meßsystem 23 und den Venturirohren 44 und 45 positioniert ist.

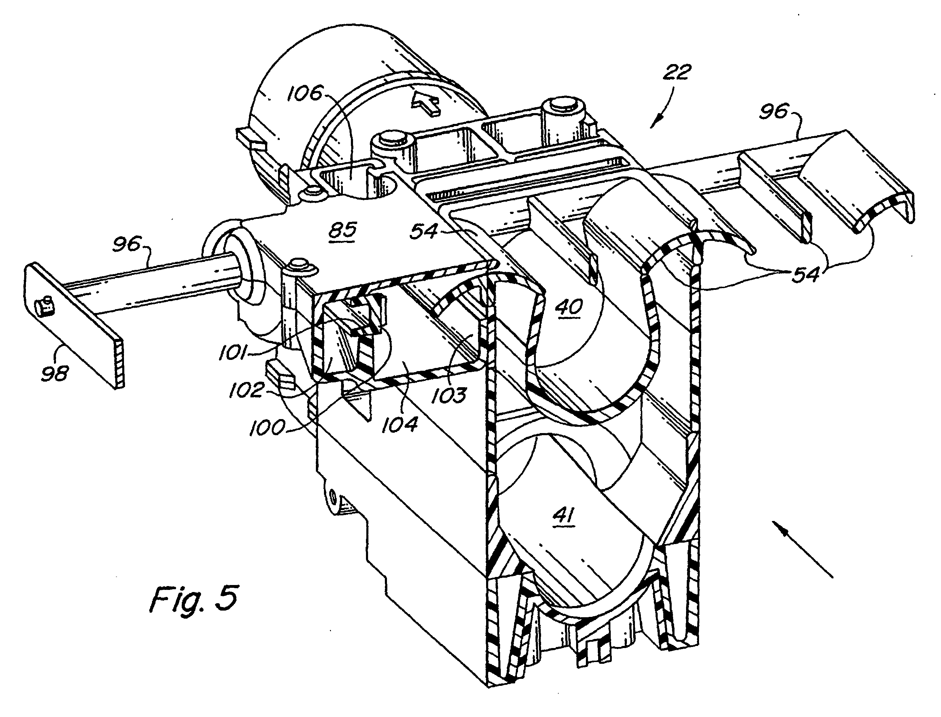

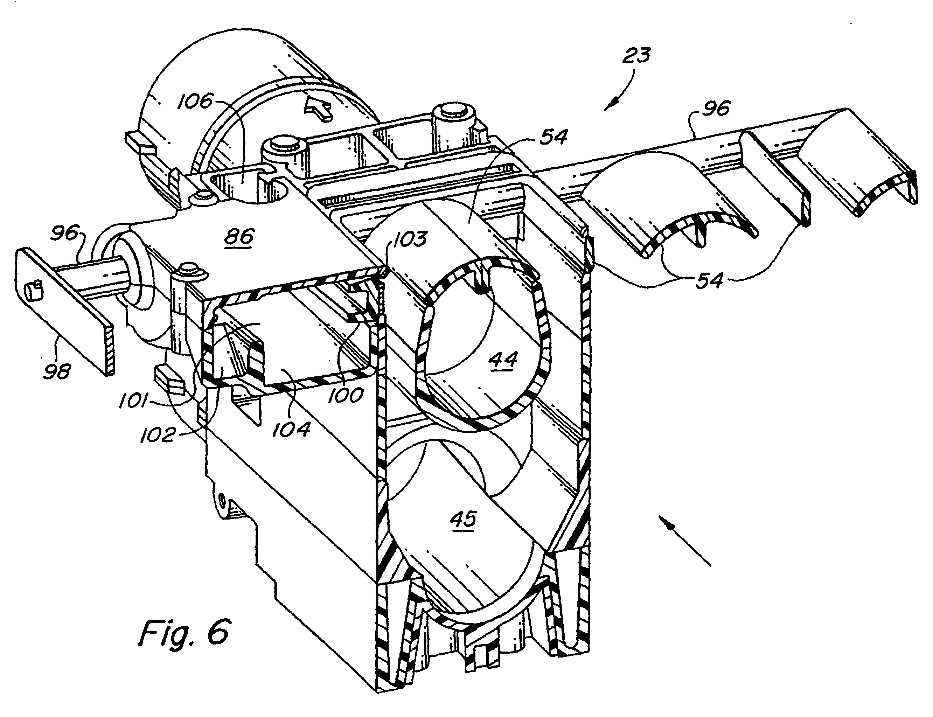

Wenn das erste Auswahlventil 52 sich in seiner ersten Position befindet, wie in Figur 5 dargestellt, werden Produkte aus dem ersten Meßsystem 22 in die obere Reihe von Venturirohren 40 geleitet, und durch konvexe Ventilelemente 54 von der unteren Reihe von Venturirohren 41 abgesperrt. Der obere Bereich des Luftstroms, der durch die obere Reihe von Venturirohren 40 strömt, nimmt die abgemessenen Produkte mit, die aus dem ersten Produkttank 18 stammen, und durch das erste Meßsystem 22 dem Luftstrom aufgegeben wurden, und strömt dann durch die oberen Rohre 42 in die obere Reihe von Venturirohren 44, die im zweiten pneumatischen Primärverteiler 27 angeordnet sind. Das in Figur 6 dargestellte zweite Auswahlventil 53 befindet sich in seiner zweiten Position, wobei abgemessene Produkte aus dem zweiten Produkttank 19 durch das zweite Meßsystem abgemessen und der unteren Reihe von Venturirohren 45 zugeführt werden, aber durch die konvexen Ventilelemente 54 von der oberen Reihe von Venturirohren 44 abgesperrt werden. In der dargestellten Ausführungsform werden Produkte aus dem ersten Produkttank 18 durch die oberen Reihen von Rohren 42, 46 und Venturirohre 40, 44 geleitet, und Produkte aus dem zweiten Produkttank 19 durch die unteren Reihen von Rohren 47 und Venturirohre 45. Der erste pneumatische Primärverteiler 26 und der zweite pneumatische Primärverteiler 27 sind identisch und die Positionen der Auswahlventile 52, 53 könnten vertauscht werden, wenn der Bediener beabsichtigt, die untere Reihe von Rohren und Venturirohren mit Produkten aus dem ersten Produkttank 18 und die obere Reihe von Rohren und Venturirohren mit Produkten aus dem zweiten Produkttank 19 zu beaufschlagen.

Die beiden Primärverteiler 26, 27 sind mit Trägern 60 aus Metall in der Form eines umgedrehten U ausgestattet, die durch Befestigungsschrauben 62 an den jeweiligen Meßsystemen 22, 23 befestigt sind. Die Meßsysteme 22, 23 sind wiederum am Rahmen 16 befestigt. Unterhalb einer Grundplatte 64 des Trägers 60 erstrecken sich sowohl die untere Reihe von Venturirohren 41 als auch die obere Reihe von Venturirohren 40. Die Venturirohre 40, 41 sind aus Kunststoff hergestellt und durch Schrauben am Träger 60 befestigt. Die untere Reihe von Venturirohren 41 ist bodenseitig offen. Kunststoffstopfen 66 zum Schließen der Böden der Venturirohre 41 sind an einer Platte 68 durch Schrauben 70 befestigt. Die Platte 68 wird durch Schrauben 72 festgehalten, welche sich von Armen 73 des Trägers 60 nach unten erstrecken, und wird durch große Flügelmuttern 74 an den Schrauben 72 befestigt und gehalten.

Die vorliegende Erfindung wird anhand eines Sägeräts 10 mit zwei Luftströmen (double shot) offenbart, d. h. zwei getrennte Produkte werden gleichzeitig ausgebracht. Die Erfindung könnte auch an einem Sägerät mit drei Luftströmen (triple shot) verwendet werden, bei dem drei getrennte Produkte gleichzeitig ausgebracht werden. Bei einem Sägerät mit drei Luftströmen wird ein dritter Primärverteiler hinzugefügt und bei jedem Verteilergehäuse kommt eine weitere Reihe von Venturirohren hinzu. Diese zusätzliche Reihe ist eine mittlere Reihe, die zwischen der oberen Reihe 40 und unteren Reihe 41 angeordnet wird. Jeder Primärverteiler würde mit zwei Ventilen ausgestattet, von denen ein erstes festlegt, ob Produkte zu der oberen Reihe der Venturirohre 40 fließen, und ein zweites Ventil, das festlegt, ob an der ersten Reihe von Venturirohren 40 vorbeifließende Produkte zur mittleren oder unteren Reihe von Venturirohren geleitet werden.

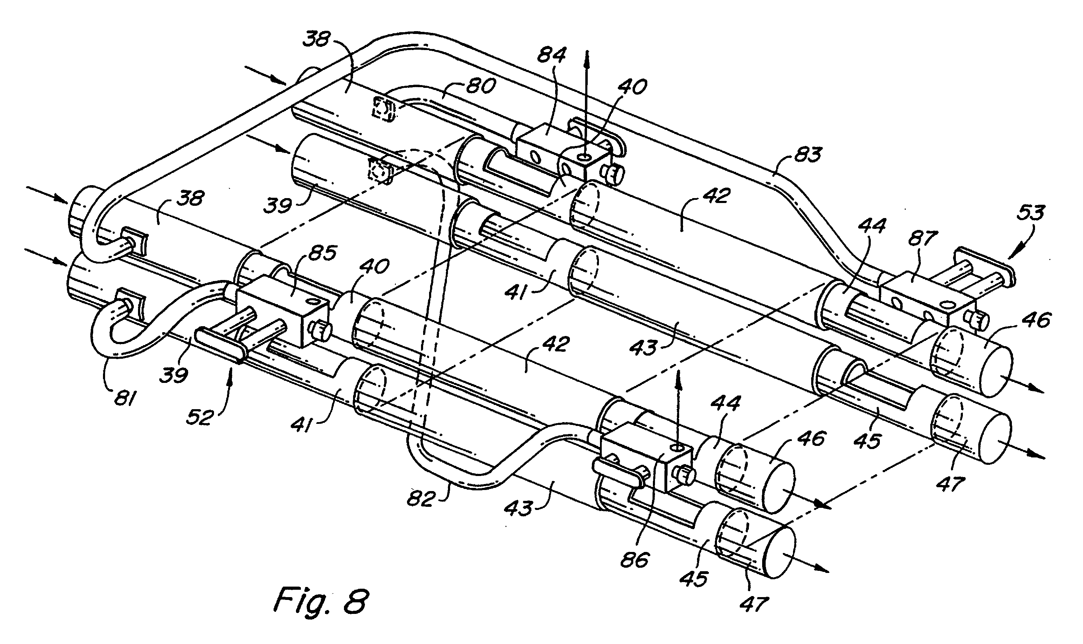

Luft vom pneumatischen Verteilersystem 24 wird verwendet, um die Produkttanks 18, 19 unter Druck zu setzen. Diese Luft wird an den äußersten ersten Rohren 38 und 39 sowohl der unteren als auch der oberen Reihe abgegriffen. Diese Luftströme werden durch Schläuche 80, 81, 82 und 83 jeweils Belüftungsventilen 84, 85, 86 und 87 zugeführt. Wie in Figur 8 dargestellt, steuern die Auswahlventile 52, 53 den Fluß abgemessener Produkte durch die obere und untere Reihe von Venturirohren 40, 41, 44, 45. Die Auswahlventile 52, 53 steuern auch den Luftfluß, der die Produkttanks 18, 19 mit Druck beaufschlagt. Wenn das Auswahlventil 52 sich in seiner ersten Position befindet, wird Luft von dem oberen ersten Rohr 38 durch den Luftschlauch 80 abgezweigt und dem Belüftungsventil 84 zugeführt, das offen ist, und leitet Luft durch einen Meßsystemkanal 90 in eine sich aufwärts erstreckende Leitung 92, die einen Teil einer im Produkttank 18 angeordneten Leiter 94 bildet. Diese Luft wird in den oberen Bereich des Produkttanks 18 geleitet und wird benutzt, den Produkttank 18 leicht unter Druck zu setzen. Da das Auswahlventil 52 sich in seiner ersten Position befindet, ist das Belüftungsventil 85 geschlossen, welches mit Luft aus dem Schlauch 81 beaufschlagt wird. Das Auswahlventil 53 ist in seiner zweiten Position, so daß das Belüftungsventil 86 geöffnet wird, und letzteres Luft aus dem Schlauch 82 ermöglicht, in einen Meßsystemkanal 90 des zweiten Meßsystems 23 zu strömen, und den Produkttank 19 unter Druck zu setzen. In ähnlicher Weise ist das Belüftungsventil 87 für aus dem Schlauch 83 kommende Luft geschlossen.

Die Auswahlventile 52 und 53 sind leiterförmig gestaltet, wobei sich längs erstreckende konvexe Ventilelemente 54 zwischen zwei quer verlaufenden Stäben 96 erstrecken. Die Enden der Auswahlventile 52, 53 sind mit Handgriffen 98 ausgestattet, um die Gleitbewegung der Auswahlventile 52, 53 zu erleichtern. Die Handgriffe 98 können in der jeweils ausgewählten Position durch Sperreinrichtungen 99 arretiert werden, die die Handgriffe 98 der Auswahlventile 52, 53 in der ersten bzw. zweiten Position festsetzen. Zwischen den Handgriffen 98 und den Ventilelementen 54 sind Belüftungsventile 100, die entweder eine Öffnung 101 in einer Luftkammer 102 oder eine Öffnung 103 in einer Luftkammer 104 verschließen. In Figur 5 ist das Auswahlventil 52 in seiner ersten Position dargestellt, so daß das Belüftungsventil 85 geschlossen ist. Das Belüftungsventil 85 ist durch das Belüftungsventil 100 geschlossen, welches die Öffnung 101 schließt und damit die Luftkammer 102 von der Luftkammer 104 abtrennt. In Figur 6 ist das Auswahlventil 53 in seiner zweiten Position, so daß das Belüftungsventil 86 geöffnet ist. Wie in Figur 6 dargestellt, verschließt das Belüftungsventil 100 die Öffnung 103 in der Seitenwand der Luftkammer 104 und die Öffnung 101 zwischen den Luftkammern 102 und 104. Luft aus dem luftführenden Schlauch 83 strömt in die Luftkammer 102 und dann in die Luftkammer 104, wo sie durch die Öffnung 106 in den Meßsystemkanal 90 geleitet wird.

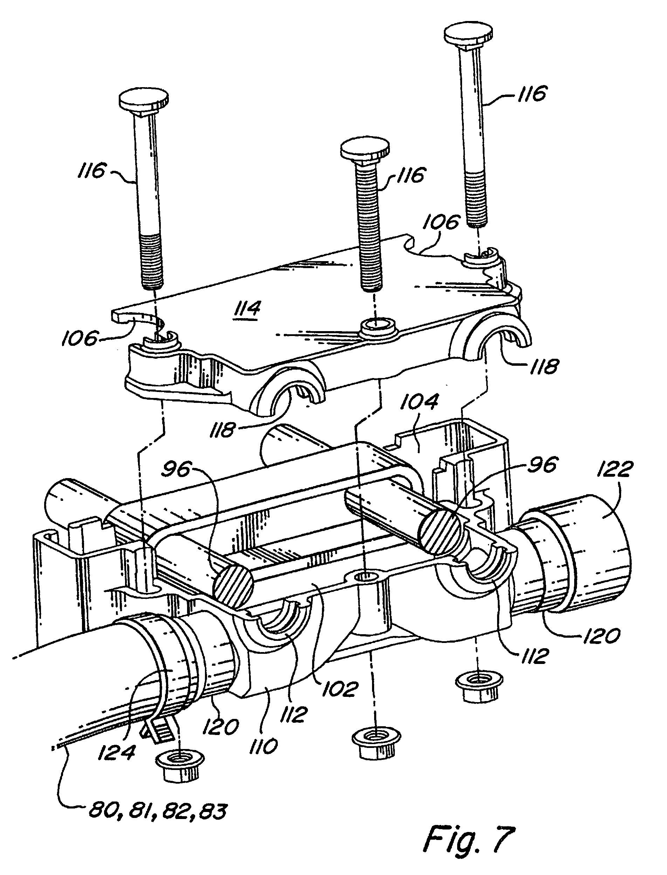

Der Aufbau der Belüftungsventile 84 - 87 ist am besten in Figur 7 dargestellt. Jedes Belüftungsventil umfaßt ein Grundgehäuse 110 mit zwei halbkreisförmigen, quer verlaufenden Öffnungen 112. Ein Deckel 114 ist durch Befestigungsschrauben 116 an das Grundgehäuse 110 geschraubt. Der Deckel 114 ist ebenfalls mit zwei halbkreisförmigen Öffnungen 118 versehen, die den Öffnungen 112 entsprechen, und einen Durchgang für Stäbe 96 des Auswahlventils 52,53 bereitstellen. Das Grundgehäuse 110 ist außerdem mit zwei Nippeln 120 versehen, an die ein Luftschlauch angekoppelt werden kann. Es ist anzumerken, daß im Betrieb ein Nippel 120 stets durch eine Kappe 122 verschlossen ist, und ein anderer Nippel 120 durch eine geeignete Schlauchschelle 124 mit einem luftführenden Schlauch verbunden ist. Zusätzlich ist der Deckel 114 mit zwei Öffnungen 106 versehen, um Luft zum Meßsystemkanal 90 zu leiten. Wiederum ist nur eine der Öffnungen 106 offen, wobei die andere durch eine Verschlußplatte 126 verschlossen wird. Es sind zwei Nippel 120 und zwei Öffnungen 106 bereitgestellt, so daß das Belüftungsventil 84 - 87 an beiden Seiten des Auswahlventils 52, 53 angebaut werden kann, und die Anzahl der nötigen Teile vermindert ist. Der Deckel 114 und das Grundgehäuse 110 definieren die erste Luftkammer 102 und die zweite Luftkammer 104.

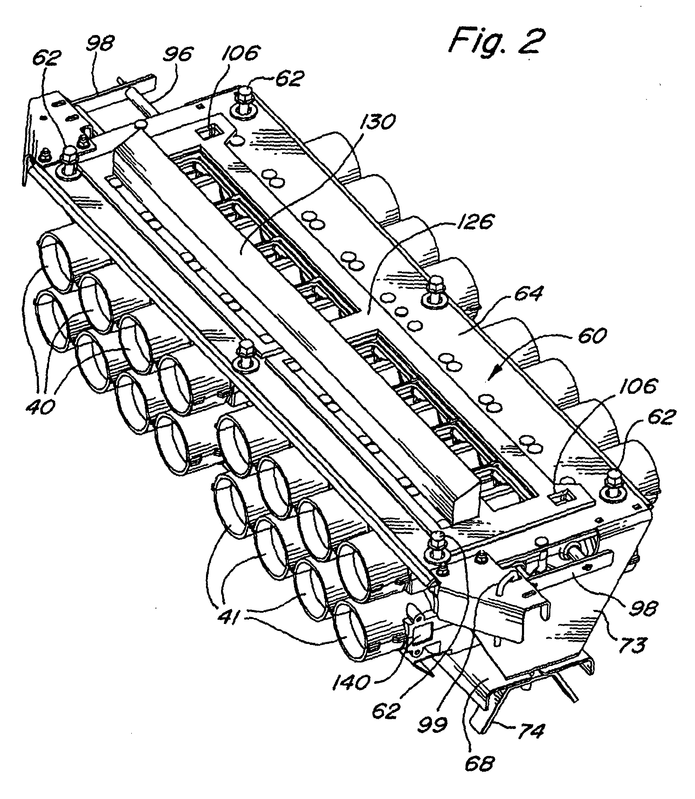

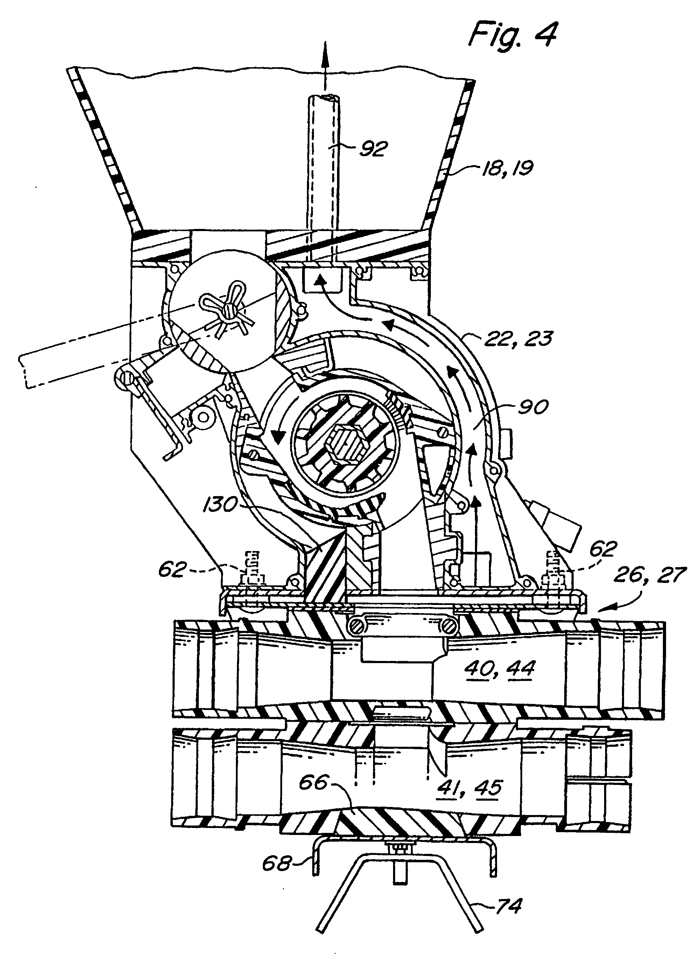

Wie in Figuren 2 und 4 dargestellt, ist die Verschlußplatte 126 mit einem sich nach oben erstreckenden Verschlußstopfen 130 ausgestattet, der sich in das erste bzw. zweite Meßsystem 22, 23 erstreckt, um die darin enthaltene Öffnung 132 zu verschließen.

Die untere Reihe der Venturirohre 41, 45 ist mit einer Ausbrechöffnung 140 versehen, die benutzt wird, falls die untere Reihe der Venturirohre 41, 45 als System mit nur einem Luftstrom (single shot) konfiguriert ist. Bei einem System mit nur einem Luftstrom würden die obere Reihe von Venturirohren 40, 44, die Auswahlventile 52, 53 und die Belüftungsventile 84 - 87 weggelassen, und die Ausbrechöffnung 140 entfernt, so daß Luft vom einzigen Luftstrom abgezweigt und durch ein zugeordnetes Gehäsue durch den Meßsystemkanal 90 in den Produkttank 18, 19 geleitet wird.

Die Erfindung beschränkt sich nicht auf die oben beschriebene Ausführungsform, sondern wird durch die folgenden Ansprüche definiert.

## Patentansprüche

1. Pneumatischer Verteiler (26, 27) zum Einbringen von Produkten in einen Luftstrom, mit einer ersten Reihe von Produkteinbringrohren, insbesondere Venturirohren (40, 44), durch die ein erster Luftstrom hindurchströmt und die mit einer Öffnung zum Einbringen der Produkte in den ersten Luftstrom versehen sind, und mit einer zweiten Reihe von Produkteinbringrohren, insbesondere Venturirohren (41, 45); durch die ein zweiter Luftstrom hindurchströmt und die mit einer Öffnung zum Einbringen der Produkte in den zweiten Luftstrom versehen sind, **gekennzeichnet durch** ein Auswahlventil (52, 53), das eine erste Position hat, in der Produkte der ersten Reihe von Produkteinbringrohren zugeführt werden, und eine zweite Position, in der Produkte der zweiten Reihe von Produkteinbringrohren zugeführt werden, wobei Ventilelemente (54) des Auswahlventils (52, 53) in der ersten Position des Auswahlventils (52, 53) jeweils eine Öffnung im Produkteinbringrohr der ersten Reihe freilassen und einen zum Produkteinbringrohr der zweiten Reihe führenden Schacht verschließen, und in der zweiten Position des Auswahlventils (52, 53), die Öffnung im Produkteinbringrohr der ersten Reihe schließen und den Schacht offenlassen, und wobei die Produkteinbringrohre der ersten Reihe jeweils innerhalb eines Schachts angeordnet sind.

2. Verteiler (26, 27) nach Anspruch 1, **dadurch gekennzeichnet, daß** die erste Reihe von Produkteinbringrohren oberhalb der zweiten Reihe von Produkteinbringrohren angeordnet ist.

3. Verteiler (26, 27) nach Anspruch 1 oder 2, **dadurch gekennzeichnet, daß** das Auswahlventil (52, 53) oberhalb der ersten Reihe von Produkteinbringrohren angeordnet ist.

4. Verteiler (26, 27) nach einem der vorhergehenden Ansprüche, **dadurch gekennzeichnet, daß** das Auswahlventil (52, 53) sich längs erstreckende konvexe Ventilelemente (54) aufweist.

5. Verteiler (26, 27) nach einem der vorhergehenden Ansprüche, **dadurch gekennzeichnet, daß** das Auswahlventil (52, 53) mit zwei quer verlaufenden, vorzugsweise in Längsrichtung verschiebbaren Stäben (96) ausgestattet ist, zwischen denen sich die Ventilelemente (54) erstrecken.

6. Verteiler (26, 27) nach einem der vorhergehenden Ansprüche, **dadurch gekennzeichnet, daß** eine Sperreinrichtung (99) das Auswahlventil (52, 53) in seiner ersten bzw. zweiten Position arretiert.

7. Verteiler (26, 27) nach einem der vorhergehenden Ansprüche, **dadurch gekennzeichnet, daß** das Auswahlventil (52, 53) mit ersten und zweiten Belüftungsventilen (84 - 87) ausgestattet ist, wobei das erste Belüftungsventil (84, 87) geöffnet und das zweite Belüftungsventil (85, 86) geschlossen ist, wenn sich das Auswahlventil (52, 53) in seiner ersten Position befindet, das geöffnete erste Belüftungsventil (84, 87) einen Teil des ersten Luftstroms in einen Produkttank (18, 19) leitet, aus dem Produkte der ersten Reihe von Produkteinbringrohren zuführbar sind, das zweite Belüftungsventil (85, 86) geöffnet und das erste Belüftungsventil (84, 87) geschlossen ist, wenn sich das Auswahlventil (52, 53) in seiner zweiten Position befindet, und das geöffnete zweite Belüftungsventil (85, 86) einen Teil des zweiten Luftstroms in den Produkttank (18, 19) leitet, aus dem Produkte in die zweite Reihe von Produkteinbringrohren zuführbar sind.

8. Verteiler (26, 27) nach Anspruch 7, **dadurch gekennzeichnet, daß** den ersten und zweiten Belüftungsventilen (84 - 87) stromaufwärts der Produkteinbringrohre aus dem Luftstrom abgezweigte Luft zugeführt wird, um sie den Produkttanks (18, 19) zuzuführen.

9. Sägerät (10) mit wenigstens einem Verteiler (26, 27) nach einem der vorhergehenden Ansprüche.

## Claims

1. A pneumatic distributor (26, 27) for introducing products into an airstream, with a first row of product introduction tubes, especially Venturi tubes (40, 44), through which flows a first airstream, and which are provided with an opening for introduction of the products to the first airstream, and with a second row of product introduction tubes, especially Venturi tubes (41, 45), through which flows a second airstream and which are provided with an opening for introduction of the products to the second airstream, **characterized by** a selector valve (52, 53) which has a first position, in which the products are fed to the first row of product introduction tubes, and a second position, in which the products are fed to the second row of product introduction tubes, wherein valve elements (54) of the selector valve (52, 53) each expose an opening in the product introduction tube of the first row and close a shaft leading to the product introduction tube of the second row in the first position of the selector valve (52, 53), and in the second position of the selector valve (52, 53) close the opening in the product introduction tube of the first row and expose the shaft, and wherein the product introduction tubes of the first row are each arranged in a shaft.

2. A distributor (26, 27) according to claim I, **characterized in that** the first row of product introduction tubes is disposed above the second row of product introduction tubes.

3. A distributor (26, 27) according to claim 1 or 2, **characterized in that** the selector valve (52, 53) is arranged above the first row of product introduction tubes.

4. A distributor (26, 27) according to any of the preceding claims, **characterized in that** the selector valve (52, 53) comprises longitudinally extending, convex valve elements (54).

5. A distributor (26, 27) according to any of the preceding claims, **characterized in that** the selector valve (52, 53) is provided with two transversely extending rods (96), preferably slidable in the longitudinal direction, between which the valve elements (54) extend.

6. A distributor (26, 27) according to any of the preceding claims, **characterized in that** a latching device (99) arrests the selector valve (52, 53) in its first or second position.

7. A distributor (26, 27) according to any of the preceding claims, **characterized in that** the selector valve (52, 53) is equipped with first and second aeration valves (84 - 87), wherein the first aeration valve (84, 87) is opened and the second aeration valve (85, 86) is closed when the selector valve (52, 53) is in its first position, the opened first aeration valve (84, 87) feeds part of the first airstream into a product tank (18, 19) from which the product can be fed to the first row of product introduction tubes, the second aeration valve (85, 86) is opened and the first aeration valve (84, 87) is closed when the selector valve (52, 53) is in its second position and the opened second aeration valve (85, 86) feeds part of the second airstream into the product tank (18, 19) from which products can be fed into the second row of product introduction tubes.

8. A distributor (26, 27) according to claim 7, **characterized in that** air branched off from the airstream upstream of the product introduction tubes is fed to the first and second aeration valves (84 - 87), in order to feed it to the product tanks (18, 19).

9. A seeder (10) with at least one distributor (26, 27) according to any of the preceding claims.

## Revendications

1. Distributeur pneumatique (26, 27) destiné à introduire des matières dans un flux d'air, comprenant une première rangée de tubes de distribution des matières, en particulier des tubes venturis (40, 44), à travers lesquels circule un premier flux d'air et qui sont munis d'un orifice pour introduire les matières dans le premier flux d'air, et comprenant une deuxième rangée de tubes de distribution des matières, en particulier des tubes venturis (41, 45), à travers lesquels circule un deuxième flux d'air et qui sont munis d'un orifice pour introduire les matières dans le deuxième flux d'air, **caractérisé par** une vanne de sélection (52, 53), qui dispose d'une première position, dans laquelle des matières sont acheminées vers la première rangée de tubes de distribution des matières, et une deuxième position, dans laquelle des matières sont acheminées vers la deuxième rangée de tubes de distribution des matières, sachant que, dans la première position de la vanne de sélection (52, 53), des éléments (54) de la vanne de sélection (52, 53) libèrent respectivement un orifice dans le tube de distribution des matières de la première rangée et masquent un puits guidant vers le tube de distribution des matières de la deuxième rangée, et dans la deuxième position de la vanne de sélection (52, 53), masquent l'orifice dans le tube de distribution des matières de la première rangée et laissent le puits ouvert, et sachant que les tubes de distribution des matières de la première rangée sont respectivement disposés à l'intérieur d'un puits.

2. Distributeur (26, 27) selon la revendication 1, **caractérisé en ce que** la première rangée de tubes de distribution des matières est disposée au-dessus de la deuxième rangée de tubes de distribution des matières.

3. Distributeur (26, 27) selon la revendication 1 ou 2, **caractérisé en ce que** la vanne de sélection (52, 53) est disposée au-dessus de la première rangée de tubes de distribution des matières.

4. Distributeur (26, 27) selon une des revendications précédentes, **caractérisé en ce que** la vanne de sélection (52, 53) comporte des éléments de vanne (54) convexes qui s'étendent dans le sens longitudinal.

5. Distributeur (26, 27) selon une des revendications précédentes, **caractérisé en ce que** la vanne de sélection (52, 53) comporte deux tiges (96), disposées transversalement et pouvant coulisser de préférence dans le sens longitudinal, entre lesquelles s'étendent les éléments de vanne (54).

6. Distributeur (26, 27) selon une des revendications précédentes, **caractérisé en ce qu'**un dispositif de blocage (99) bloque la vanne de sélection (52, 53) dans sa première ou sa deuxième position.

7. Distributeur (26, 27) selon une des revendications précédentes, **caractérisé en ce que** la vanne de sélection (52, 53) est équipée de premiers et deuxièmes clapets de ventilation (84-87), sachant que le premier clapet de ventilation (84, 87) est ouvert et le deuxième clapet de ventilation (85, 86) est fermé lorsque la vanne de sélection (52, 53) est dans sa première position, le premier clapet de ventilation (84, 87) ouvert guide une partie du premier flux d'air vers une trémie (18, 19), à partir de laquelle des matières peuvent être acheminées vers la première rangée de tubes de distribution des matières, le deuxième clapet de ventilation (85, 86) est ouvert et le premier clapet de ventilation (84, 87) est fermé lorsque la vanne de sélection (52, 53) est dans sa deuxième position, et le deuxième clapet de ventilation (85, 86) ouvert guide une partie du deuxième flux d'air vers une trémie (18, 19), à partir de laquelle des matières peuvent être acheminées vers la deuxième rangée de tubes de distribution des matières.

8. Distributeur (26, 27) selon la revendication 7, **caractérisé en ce que** l'air dévié hors du flux d'air est acheminé vers les premiers et deuxièmes clapets de ventilation (84-87) en amont des tubes de distribution des matières, afin que cet air soit acheminé vers les trémies (18, 19).

9. Semoir (10) comprenant au moins un distributeur (26, 27) selon une des revendications précédentes.
